# EUROPEAN PATENT APPLICATION

(11) **EP 2 498 484 A1**
(43) Date of publication of application: **12.09.2012**
(21) Application number: 11305270.8
(22) Date of filing: 11.03.2011
(51) Int. Cl.: H04M 3/42, H04M 3/58

(54) **Method and a system for routing telephone calls within an enterprise telephone system**

(71) Applicant: Alcatel Lucent, 75007 Paris (FR)
(72) Inventor: Sorokin, Roman, 92707, Colombes (FR)
(74) Representative: Sciaux, Edmond

(57) **Abstract**

A method of routing telephone calls in a private-branch enterprise telephone system comprising at least a first group and a second group of user profiles, and wherein each user profile is associated with a telephone handset managed by said enterprise telephone system, said method comprising of the steps of:
- determining the position of a first handset involved in a telephone call connection or a telephone call in instance, said first handset belonging to a first group of user profiles,
- determining the user profile of a second handset being the closest handset to said first handset and belonging to a profile group other than to the first group;
- prompting at least one of said handsets to route the telephone call to the other handset;
- routing the call by the enterprise telephone system from the first handset to the second handset in function of the response prompt of either handsets.

## Description

The present invention concerns a method and a system for routing telephone calls within an enterprise telephone system, in particular for routing calls between two different predetermined types of handsets registered with the enterprise telephone system.

### BACKGROUND

This section introduces aspects that may be helpful in facilitating a better understanding of the invention. Accordingly, the statements of this section are to be read in this light and are not to be understood as admissions about what is in the prior art or what is not in the prior art.

Enterprise telephone systems are often of the private-branch-exchange (PBX) type, for example, Alcatel-Lucent OmniPCX Enterprise.

These enterprise systems are suited to handling different types of end-user handsets, for example different versions of the same type of phone (for example different types of fixed-line phone). Such enterprise systems may also accommodate different technologies of handsets, for example fixed line handsets and wireless handsets both connected to the same system.

If an end-user receives an important call that he prefers to take on a fixed phone for being more comfortable, he may transfer the call to a specific enterprise phone using a forwarding command and indicating the extension to forward to. Similarly, in open plan work environments, a user next to an empty conference room may prefer to continue a conversation in the privacy of the closed space. But these users need to remember the extension of the target phone, which is a bother and prone to errors.

An alternative is sought to better deal with this situation.

### BRIEF SUMMARY

An object of the present is therefore a method of routing calls according to claim 1. Another object of the present is a system for routing calls according to claim 6.

An advantage of these embodiments reside in the ability to push and/or pull telephone communications to nearby handsets upon user confirmation, irrespective of the telephone type or whether one knows the identity or telephone number of the handset to which one wishes the call transferred to.

A further advantage is that one can transfer the call at any time during the active period of the call.

### BRIEF DESCRIPTION

Some embodiments of devices and methods in accordance with embodiments of the present invention are now described, by way of example only, and with reference to the accompanying drawings, in which:
Figure 1 illustrates an enterprise communication system according to a first embodiment.
Figure 2 illustrates a process of routing telephone calls in system of figure 1.

### DETAILED DESCRIPTION

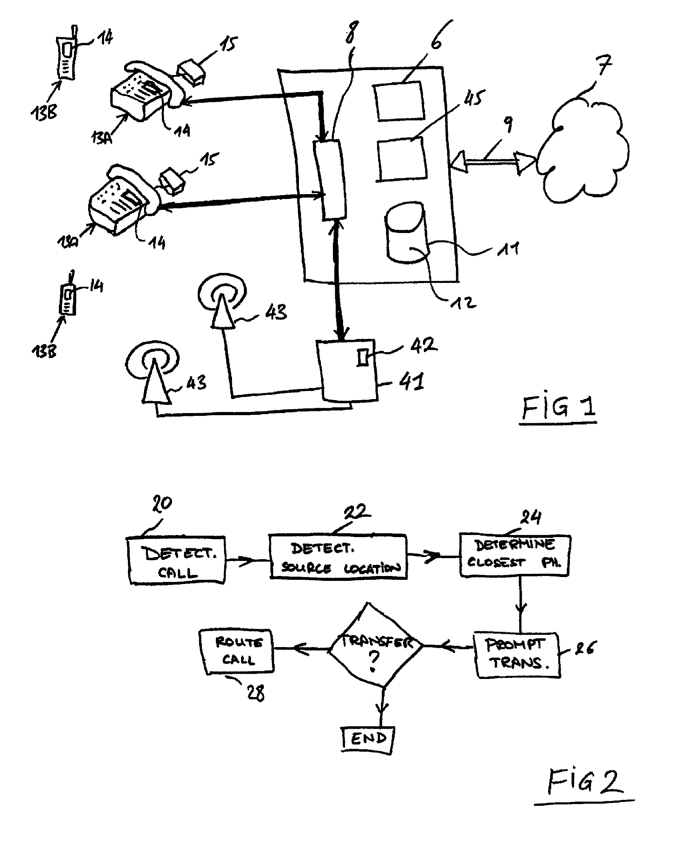

Figure 1 illustrates a Private Branch Exchange (PBX)-type enterprise telephone system 1 according to a first embodiment of the invention.

The system comprises PBX server 5 connected to the public switched telephone network (PSTN) 7 via trunk lines 9.

The server 5 comprises, inter alia :
- a processor 6 adapted to manage the call management, hereinafter referred to as the "Manager" 6, and
- PBX's internal switching, or routing, controller 8, adapted to connect the trunk line 9 to any one or more of a plurality of end-user terminals 13,
   as known in the art, and as such won't be further detailed herein except where necessary. The server 5 may for example be based on the Alcatel-Lucent OmniPCX Enterprise system.

The plurality of terminals 13 are connected physically (wired) or wirelessly with the server 5 for effecting two-way communications (incoming and outgoing communication sessions), for example telephone calls and services.

The terminals 13 may for example be of the fixed-line type, referenced terminal 13A hereafter, comprising a physical wire connection to the server 5. The terminals 13 may further be of the wireless type, referenced terminal 13B hereafter, communication with the server 5 over an air interface. The terminals 13 are not however limited to these communication technologies, and may for example communicate using other means.

In the presently illustrated embodiment, the wireless-type terminal 13B are connected to the server 5 by Wifi radio protocol, but could also connect using other radio protocols, for example Bluetooth®.

Each terminal 13 comprises a graphical user interface 14 (GUI) and associated control circuit and a control for displaying information and interacting with a user. The control may for example take the form of an application, or an "applet". For example, the GUI may display callee or caller identity information. The GUI may also be used to access personal setting management. Furthermore, the GUI may be used to read messages sent from the server 5, and to interact with the server 5.

Each fixed-lined terminal 13A is associated with a positioning device such as a beacon, a tag, or a signal emitter 15. The present embodiment makes use of a Wifi tag 15, which is adapted to respond to Wifi signaling probes, in particular for wireless identification purposes or localization purposes. The tag 15 may be built-in to the fixed terminal 13A, or may be separate and connected to the terminal 13 by cable interface.

Wireless terminals 13B, by the very nature of their communication protocol, have built-in Wifi receptive hardware adapted to respond to Wifi probes as well as used for communicating. The wireless terminals 13B may thus respond to "pings", or requests for information, from appropriate wireless hardware.

The server 5 further comprises a storage device 11 comprising a database 12, said database comprising user-profiles of users registered on the communication system 1.

Each user profile comprises information relative to the phone number of the terminal, for example terminal type, identification information necessary or useful for call routing, and, optionally, the identity or name of the user affected the user profile. The user profile may further comprise links, information, addresses, or authentication information to auxiliary services such as voicemail, Short Message Services (SMS) application, and so on. A user profile is usually linked to a single terminal 13.

Each of the user profiles may be assigned one or more groups, whereby each group is representative of a "type" or "membership". For example, each group may represent users having one or more of the following characteristics: having a fixed-line terminal, having a wireless terminal, being part of management staff, being part of secretarial staff, being permanent staff, being contract staff, being localized in a particular building, being part of a particular team or project, and/or having a particular function.

As such, the groups may for example denote function delimitations, hierarchical delimitations, technical delimitations, and/or geographic delimitations.

The system 1 further comprises a wireless communication server 41 associated with the server 5 for managing the communication and services to the wireless terminals 13B. The wireless communication server 41 is thus adapted to allow the mobile terminals 13B to communicate while roaming the premises.

The communication server 41 comprises a plurality of Wifi antennas 43, adapted to enable wireless communication from the wireless terminals 13B, via the antennas 43 and the wireless communication server 41 to the server 5.

The plurality of Wifi antennas 43 may for example be disposed at regular or irregular intervals in the premises of the business housing the communication system 1.

The system 1 further comprises a localization module 42 adapted for localizing the terminals 13 relatively to each other. The localization module 42 may for example be disposed in the communication server 41 and make use of antennas 43 for triangulating wireless terminals 13B, based on signal strength, ping times, or other well known techniques such as TOA (time of arrival) or TDOA (time difference of arrival) techniques. The localization module 42 may also make use of a separate beacon devices for localizing terminals 13.

The server 5 further comprises a communication module 45, adapted to interact with the terminals 13, and in particular with the GUI controller 14 of each terminal 13. The communication module 45 may thus send status information to the terminals 13, receive status information from the terminals, or prompt the user of the terminal 13 for an action.

In particular, according to an embodiment, the communication module 45 may send messages to determined terminals 13, prompting the user to forward, or reroute, his or her call to a nearby terminal 13. For example, a message could resemble the following "TRANSFER CALL TO NEAREST DETECTED TERMINAL, AT 1.4 METERS?". The module 45 returns the response given by the user to the server 5, for example "YES" or "NO".

Communication from the communication module 45 uses, for example, the habitual communication channels between the server 5 and the terminals 13.

Figure 2 illustrates a process of running the system 1 of figure 1, wherein a telephone call originates from outside of the system 1, and is destined for a particular terminal 13, whether a fixed-line terminal 13A or wireless terminal 13B. The same case can be made for a call originating inside the system 1, from any one fixed terminal 13A or wireless terminal 13B, to a terminal outside of the system 1.

For the sake of convenience, the terminal 13 which originates the call, or to which the call is destined, will be referred to as the "source" terminal 13.

In either cases described hereabove, when the manager 6 of the system 1 identifies an incoming or outgoing communication (step 20), for example a telephone call, the manager 6 requests position information at the localization module 42 (step 22) of the source terminal.

To determine the approximate location of the source terminal, any known technique to the skilled person in the art may be used. For example, the localization module 42 sends out probing signals to the source terminal in question, to determine its position via a measure of the signal strength, round-trip ping time, etc. The localization module 42 may make use of the existing antennas 43, or may use dedicated hardware.

If the terminal in question is a fixed terminal 13, the Wifi tag 15 associated with the fixed terminal 13A will be used for identification and localization.

Alternatively, prebuilt localization maps of at least some of the terminals 13 may also be used.

Then, the same localization module 42 will probe surrounding terminals 13 to determine the other closest terminal 13 from the source terminal (step 24). This terminal will be referred to as the "closest terminal" hereafter.

Each terminal probed by the localization module 42 sends back an indentifying reference, for example the user profile reference, allowing the manager 6 to identify it, and the group it belongs to.

The localization module 42 sends back the identification reference of the closest terminal to the manager 6.

However, the localization module 42 will only retain the closest terminal 13 found that belongs to a different group. If the first-found closest terminal is of the same group as the source terminal, the manager 6 requests a further scan by the localization module 42 to identify the next-closest terminal belonging to a different group than the source terminal. This retained closest terminal belonging to a different group to that of the source terminal will processed as the closest terminal henceforth. For example, the source and closest terminals may belong respectively to the "manager" and "assistant" groups.

Stated another way, only terminals belonging to different groups may be referred to as source and closest terminals.

Advantageously, the manager may determine which group the closest terminal must belong to, depending on the group of the source terminal.

Advantageously, the localization module 42 may begin probing for terminals 13 from the antennas or beacons 43 that detected the source terminal, for faster detection speed.

Once the source and closest terminals identified, the manager 6 then prompts the communication module 45 to send a simultaneous message to both the source and closest terminals, prompting whether the respective user of the source or closest terminal wishes to transfer the call to the other one of the source or closest terminal (step 26).

For example, let us look at a case where the source terminal is a wireless terminal belonging to a "mobile" group, and the closest terminal is a fixed line terminal belonging to a "secretary" group, the communication module 45 prompts the respective GUl 14 on each terminal 13 to send the following messages:
- "call detected on terminal 1.5 m away. Take call?" on the closest terminal ;
   and
- "detected proximate terminal 1.6 m away. Forward call?" on the source terminal.

If a user of either terminal agrees to the action, then the manager 6 will control the transfer of the call routing between the source and closest terminal (step 28). Else, the prompt may be set to be enduring, or may time out after a predetermined time.

As such, the manager 6 is adapted to pull a call away from one terminal or push a call to another terminal.

In another embodiment, the prompt by the communication module 45 may be permanently displayed and dynamically adjusted as the phone localization changes in real time. Alternatively, the communication modules may display the prompt to transfer call only at the beginning of a call.

In yet another embodiment, predetermined user rights may be associated with call transfer between terminals, such that the source terminal must initiate the transfer, or confirm the transfer requested from the closest terminal.

The manager can then control via the router 8 the establishment of the call, or the re-routing of the call, in function of the original destination and whether the user of the phone has opted to take the communication at a nearby closest phone.

Of course, the pair of phones is not limited to a wireless terminal and a wired terminal.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A method of routing telephone calls in a private-branch enterprise telephone system comprising at least a first group and a second group of user profiles, and wherein each user profile is associated with a telephone handset managed by said enterprise telephone system,
said method, during a telephone call connection or a telephone call in instance, comprising of the steps of:
- determining the position of a first handset involved in a telephone call connection or a telephone call in instance, said first handset belonging to a first group of user profiles,
- determining the user profile of a second handset being the closest handset to said first handset and belonging to a profile group other than to the first group;
- prompting at least one of both of said first or second handsets to route the telephone call to the other one of said first or second determined handset in said other group;
- routing the call by the enterprise telephone system from the first handset to the second handset in function of the response prompt on either or both of said first and second handsets.

2. A method according to claim 1, wherein one of the first or second handset is a wireless handset, and the other of the first or second handset is a fixed-line handset.

3. A method according to claim 1 or 2, wherein the fixed handset is associated with a wireless device adapted to respond to wireless signals for positioning purposes.

4. A method according to any one of the preceding claims, wherein the position of at least one handset is performed by comparing results to a predetermined map of position of handsets.

5. A method according to any one of the preceding claims, wherein the routing of the call is only performed once both first and second handsets have authorized the routing of the telephone call.

6. A system for routing telephone calls within an enterprise telephone system, comprising:
- an enterprise telephone server (5) adapted to manage telephone calls within said enterprise system, said server being connected to a plurality of handsets (13; 13A; 13B), each handset having a predetermined user profile amongst a plurality of potential user profiles,
- a routing server (8) to route internal and external telephone calls to, from, or between said handsets,
- a localization system (42) adapted to determine the position of at least some of said handsets in different groups, and identify a closest handset in a second group from a determined handset in a first group,
- a prompting module (45) adapted to prompt at least one of said identified handsets to transfer the telephone call to the closest handset as determined by said localization system.
wherein said telephone server is adapted to reroute telephone calls in function of the response given to the prompting application.

7. A system according to claim 6, wherein at least some of said plurality of handsets communicate with the server across an air interface,
said system further comprising wireless localization means adapted to wirelessly localize said handsets communication across the air interface.

8. A system according to claim 6 or claim 7, wherein some fixed-line handsets are fitted with a wireless positioning device adapted to localized said fixed-line handsets using wireless means.
